# DEMANDE DE BREVET EUROPEEN

(11) **EP 4 032 747 A1**
(43) Date de publication de la demande: **27.07.2022**
(21) Numéro de dépôt: 21153572.9
(22) Date de dépôt: 26.01.2021
(51) Int. Cl.: B60P 1/64, B62B 5/00, B65D 90/18

(54) **CONTAINER MOBILE DE TRANSPORT DE MARCHANDISES ET VÉHICULE EQUIPÉ D'UN TEL CONTAINER**

(71) Demandeur: ZE COMBI, 31860 Labarthe-sur-Lèze (FR)
(72) Inventeur: Giraud, Cédric, 31190 Grépiac (FR); Allouche, Francis, 75017 Paris (FR); Morellon, Claude, 64200 Biarritz (FR)
(74) Mandataire: Bringer IP

(57) **Abrégé**

L'invention concerne un container (10) mobile de transport de marchandises destiné à être chargé et déchargé d'un véhicule (100) de transport comprenant une plateforme (110) de réception du container qui s'étend en regard d'une ouverture d'accès (120) au véhicule, ledit container (10) comprenant : un caisson ; des organes roulants (16) de déplacement dudit caisson ; un coffret de logement (18) des organes roulant agencé sous ledit caisson (12) ; chaque organe roulant (16) étant monté mobile par rapport au caisson (12) entre une position déployée, dans laquelle il s'étend hors dudit coffret (18) et permet le déplacement par roulement dudit container (10) hors dudit véhicule (100), et une position rétractée dans laquelle il est logé principalement dans ledit coffret (18), ledit passage de ladite position déployée à ladite position rétractée étant obtenu spontanément lors du chargement du container (10) et le passage de ladite position rétractée à ladite position déployée étant obtenu spontanément par gravité lors du déchargement dudit container (10) dudit véhicule.

## Description

### Domaine technique de l'invention

L'invention concerne un container mobile de transport de marchandises et un véhicule de transport équipé d'un tel container.

### Arrière-plan technologique

Le volume de colis distribué augmente régulièrement du fait du développement du commerce à distance, plus communément désigné par l'expression de « e-commerce ». La logistique de distribution des colis, en particulier ceux issus du e-commerce, mais pas uniquement, est relativement complexe en particulier dans les centres villes des grandes métropoles.

Pour faciliter l'acheminement des colis dans les centres urbains, il est aujourd'hui courant de scinder l'acheminement des colis entre leur lieu de collecte et leur lieu de distribution en plusieurs trajets parmi lesquels un trajet de collecte du colis entre le lieu de dépose du colis par l'expéditeur et un entrepôt de stockage initial, un trajet de transport entre l'entrepôt de stockage initial et l'entrepôt de stockage final (des trajets intermédiaires associés à des entrepôts de stockage intermédiaire peuvent être prévus selon les distances et les moyens de transport utilisés) et un trajet de livraison du colis entre l'entrepôt de stockage final, généralement localisé en zone péri-urbaine, et le destinataire du colis.

Chaque type de trajet (trajet de collecte, trajet de transport, trajet de distribution) nécessite le recours à des véhicules spécifiques.

A titre d'exemple, il est fréquent que le trajet de collecte mette en oeuvre des camionnettes permettant de récolter les colis sur les lieux de distribution (points relais, entreprises, etc.) associées éventuellement à des gros porteurs pour acheminer les colis vers un entrepôt de stockage de collecte. Le trajet de transport fait appel à des gros porteurs, à des véhicules ferroviaires ou aériens selon les destinations. Le trajet de distribution fait généralement appel à des véhicules plus légers, du type camionnettes thermiques, pour distribuer chaque colis à son point de distribution définitif.

En pratique, des opérateurs sont chargés du transfert des colis d'un véhicule à un autre. Ce transfert de colis génère une rupture de charge qui impacte la durée de l'acheminement et les couts correspondants. En outre, il est fréquent que le transbordement de colis d'un véhicule à un autre endommage certains colis du fait d'une manipulation rapide et parfois peu attentive de la part des opérateurs.

Les inventeurs ont donc cherché à proposer un container mobile de transport de marchandises pouvant faciliter le transfert du container d'un véhicule à un autre et ainsi limiter la rupture de charge inhérente à un tel transfert.

### Objectifs de l'invention

L'invention vise à fournir un container mobile de transport de marchandises adapté pour pourvoir être chargé et déchargé d'un véhicule par un opérateur seul.

L'invention vise aussi à fournir, dans au moins un mode de réalisation, un container mobile de transport de marchandises adapté pour pouvoir être chargé et déchargé d'un véhicule sans équipement spécifique.

L'invention vise aussi à fournir, dans au moins un mode de réalisation, un container mobile de transport de marchandises qui limite les risques d'endommagement des marchandises transportés par un tel container.

L'invention vise aussi à fournir un véhicule configuré pour faciliter le chargement et déchargement à son bord du container selon l'invention.

### Exposé de l'invention

Pour ce faire, l'invention concerne un container mobile de transport de marchandises destiné à être chargé et déchargé d'un véhicule de transport comprenant une plateforme de réception du container qui s'étend en regard d'une ouverture d'accès au véhicule et comprenant :
- un caisson comprenant au moins une ouverture d'accès au caisson pour pouvoir y loger des marchandises,
- des organes roulants de déplacement dudit caisson dans un sens d'avancement privilégié et selon une direction principale d'avancement, dite direction longitudinale.

Le container selon l'invention est caractérisé en ce qu'il comprend en outre, pour chaque organe roulant, un coffret de logement de cet organe roulant agencé sous ledit caisson et en ce que chaque organe roulant est monté mobile par rapport au caisson entre une position, dite position déployée, dans laquelle il s'étend hors dudit coffret et permet le déplacement par roulement dudit container (lorsqu'il est hors dudit véhicule), et une position, dite position rétractée, dans laquelle il est logé principalement dans ledit coffret (et correspondant à un agencement du container dans ledit véhicule) tout en permettant le déplacement par roulement dudit container sur ladite plateforme dudit véhicule.

Selon l'invention, le passage de ladite position déployée à ladite position rétractée est obtenu spontanément lors du chargement du container dans ledit véhicule par la combinaison du déplacement dudit caisson selon ladite direction longitudinale et un contact entre le container et une butée transversale agencée sous la plateforme dudit véhicule.

Selon l'invention, le passage de ladite position rétractée à ladite position déployée est obtenu spontanément par gravité lors du déchargement dudit container dudit véhicule.

Le container selon l'invention présente donc la particularité de disposer d'organes roulants rétractables configurés pour basculer spontanément de leur position rétractée à leur position déployée et inversement par la combinaison du déplacement du container et d'une butée transversale agencée sous la plateforme du véhicule (pour le passage de la position déployée vers la position rétractée) et par la gravité (pour le passage de la position rétractée vers la position déployée).

Ainsi, un opérateur peut charger et décharger le container selon l'invention d'un véhicule présentant une plateforme de réception de ce container et une butée transversale agencée sous la plateforme, sans difficultés particulières, sans effort, et sans équipement spécifique. En particulier, le container selon l'invention permet de supprimer la rupture de charge en supprimant le besoin de déplacer les marchandises d'un véhicule à un autre lors de la livraison du dernier kilomètre. Le container selon l'invention permet son utilisation à la fois pour le transport vers le dernier kilomètre, pour le transport du dernier kilomètre et pour son déplacement jusqu'au lieu de livraison final.

En outre, un container selon l'invention permet d'optimiser le volume embarqué dans un véhicule donné en réduisant l'espace occupé par les organes roulants une fois le container logé dans le véhicule. En d'autres termes, à véhicule identique, un container selon l'invention permet d'augmenter le volume de marchandises transportables dans un container par ce véhicule.

Avantageusement et selon l'invention, le container comprend, pour chaque organe roulant, une armature longitudinale comprenant à une première extrémité longitudinale, au moins une roulette de contact avec ladite butée transversale, et à une seconde extrémité longitudinale, un étrier de support dudit organe roulant monté mobile en rotation par rapport à ladite armature autour d'un axe transversal, dit axe de pivotement, permettant audit organe roulant de passer de ladite position déployée à ladite position rétractée lors du chargement du container dans ledit véhicule et inversement lors du déchargement dudit container hors dudit véhicule, chaque roulette de contact formant en outre des moyens de roulement additionnels dudit container sur ladite plateforme dudit véhicule lorsque lesdits organes roulants sont dans ladite position rétractée.

Selon cet aspect avantageux de l'invention, chaque organe roulant est porté par une armature longitudinale équipée de roulettes de contact configurées pour faciliter le chargement du container dans le véhicule. En outre, ces roulettes participent au déplacement par roulement du container sur la plateforme du véhicule lorsque le container est logé dans le véhicule.

Chaque organe roulant est en outre monté sur un étrier pivotant par rapport à ladite armature entre la position rétractée et la position déployée et inversement.

Avantageusement et selon l'invention, chaque étrier de support dudit organe roulant comprend en outre :
- un arbre formant l'axe de pivotement s'étendant dans une lumière oblongue verticale ménagée dans ladite armature et configuré pour pouvoir se déplacer spontanément par gravité dans ladite lumière oblongue d'une position, dite position verrouillée, à une position, dite position libre, et inversement par contact dudit organe roulant avec le sol,
- une patte de verrouillage configurée pour venir s'encastrer dans une mortaise formée dans ladite armature longitudinale dans ladite position verrouillée et pour pouvoir s'en désolidariser spontanément sous l'effet de la gravité lors du passage vers ladite position libre.

Selon cet aspect de l'invention, chaque organe roulant peut présenter trois positions distinctes : une position déployée verrouillée dans laquelle l'organe roulant est sorti du coffret de logement et la patte de verrouillage associée est encastrée dans la mortaise conjuguée formée dans l'armature longitudinale ; une position déployée libre dans laquelle l'organe roulant est sorti du coffret de logement et la patte de verrouillage associée est désolidarisée de la mortaise conjuguée sous l'effet de la gravité (l'organe roulant ne touchant pas le sol dans cette position du fait du déplacement de l'arbre de pivotement dans la lumière oblongue verticale) ; une position rétractée dans laquelle l'organe roulant est pivoté par rapport à la position déployée et est logé dans le coffret de logement.

Un container selon cet aspect de l'invention peut ainsi coopérer avec un véhicule selon l'invention comprenant :
- une plateforme qui s'étend à une distance inférieure à 30 cm du sol, de préférence inférieure à 20 cm du sol, et supérieure à la distance qui sépare, dans la position déployée les organes roulants, l'axe de pivotement et la surface de contact des organes roulants avec le sol,
- une butée transversale ménagée sous la plateforme du véhicule qui présente une portion inclinée formant une butée d'élévation dudit container par contact avec les roulettes de contact du container et permettant de passer les organes roulants de la position verrouillée à ladite position libre, et une portion verticale s'étendant vers le sol depuis la butée d'élévation formant une butée de basculement de l'organe roulant de la position déployée libre à la position rétractée.

Ainsi et selon cet aspect de l'invention, lors du déplacement du container vers un véhicule selon l'invention selon la direction longitudinale, les roulettes de contact entre en contact avec la butée d'élévation, ce qui permet de soulever légèrement le container du sol, et entraine spontanément le passage de l'organe roulant de la position déployée verrouillée à la position déployée libre, par la désolidarisation entre la patte de verrouillage et la mortaise associée qui résulte du coulissement de l'arbre de pivotement dans la lumière de guidage verticale. La poursuite du déplacement le long de la direction longitudinale entraine le contact entre l'organe roulant et la butée de basculement, ce qui entraine spontanément le passage de l'organe roulant de la position déployée libre à la position rétractée par pivotement de l'arbre de pivotement.

Avantageusement et selon l'invention, chaque patte de verrouillage s'étend transversalement de part et d'autre de ladite armature de manière à former une butée longitudinale qui entrave le balancement dudit organe roulant par contact avec ladite armature lors du déchargement dudit container.

Lors du déchargement du container d'un véhicule, chaque organe roulant bascule spontanément de la position rétractée à la position déployée libre. Ce basculement spontané peut générer un balancement d'avant en arrière (c'est-à-dire selon la direction longitudinale) de l'organe roulant par inertie. Ce balancement est limité par la présence d'une butée de blocage longitudinale formée par l'extension transversale de part et d'autre de l'armature de la patte de guidage. En effet, cet agencement de la patte de guidage lui permet de rentrer en contact rapidement avec l'armature longitudinale, ce qui entrave son balancement et permet d'atteindre rapidement la position d'équilibre de l'organe roulant. Cette position d'équilibre correspond à une position qui permet, lors du contact de l'organe roulant avec le sol, d'encastrer la patte de verrouillage dans la portaise conjuguée.

Avantageusement et selon l'invention, chaque armature longitudinale comprend trois roulettes de contact montées sur un même arbre transversal solidaire de ladite armature.

Cet aspect particulier de l'invention permet un contact stabilisé entre le container et la butée d'élévation du véhicule et réduit l'effort à produire par un opérateur pour charger le container dans le véhicule.

Avantageusement et selon l'invention, le container comprend un unique coffret de logement de l'ensemble desdits organes roulants.

Selon cet aspect, le coffret est logé sous le caisson et est configuré pour recevoir l'ensemble des organes roulants dans la position rétractée.

Avantageusement et selon l'invention, lesdits organes roulants sont des roues.

De préférence, le container comprend quatre roues agencées sous le caisson, deux roues à l'avant et deux roues à l'arrière, l'avant et l'arrière étant définis par rapport à la direction d'avancement privilégié du container. Ainsi, lors du chargement du container dans un véhicule, les deux roues avant basculent simultanément de la position déployée verrouillée à la position déployée libre, puis à la position rétractée dans le coffret de logement, suivies ensuite par les roues arrières qui basculent simultanément de la position déployée verrouillée à la position déployée libre, puis à la position rétractée dans le coffret de logement.

Lors du déchargement du container d'un véhicule, les roues arrières basculent spontanément et simultanément par gravité de la position rétractée à la position déployée libre, puis à la position déployée verrouillée, suivies par les roues avants qui basculent spontanément et simultanément par gravité de la position rétractée à la position déployée libre, puis à la position déployée verrouillée.

L'invention concerne également un véhicule de transport d'au moins un container mobile de transport de marchandises selon l'invention qui comprend une plateforme de réception dudit container agencée en regard d'une ouverture d'accès au véhicule.

Le véhicule selon l'invention est caractérisé en ce que ladite plateforme s'étend à une distance inférieure à 30 cm du sol, de préférence inférieure à 20 cm du sol, et supérieure à la distance qui sépare, dans la dite position déployée desdits organes roulants, l'axe de pivotement et la surface de contact desdits organes roulants avec le sol.

Le véhicule est également caractérisé en ce que ladite plateforme comprend une butée transversale agencée sous la plateforme dudit véhicule qui présente une portion inclinée formant une butée d'élévation dudit container par contact avec desdites roulettes de contact dudit container et permettant de passer lesdits organes roulants de ladite position verrouillée à ladite position libre, et une portion verticale s'étendant vers le sol depuis ladite butée d'élévation formant une butée de basculement dudit organe roulant de ladite position déployée libre à ladite position rétractée.

Les avantages et effets techniques d'un container selon l'invention s'appliquent *mutatis mutandis* à un véhicule selon l'invention.

De préférence, la plateforme est fixe, horizontale et s'étend dans un plan sensiblement parallèle au sol sur lequel repose le véhicule selon l'invention. Cela étant, selon d'autres variantes, la plateforme peut présenter une légère inclinaison par rapport à l'horizontale, par exemple un angle de 10° par rapport à l'horizontale. Selon ce mode de réalisation spécifique, la plateforme peut être montée sur des moyens élastiques, tels que des ressorts, configurés pour maintenir la plateforme selon cet angle de 10°, en l'absence du container, et être comprimés par le container, lorsque ce dernier est chargé sur la plateforme, de telle sorte qu'elle se positionne à l'horizontale. Un des avantages de ce mode réalisation spécifique est de permettre aux ressorts d'exercer une force d'élévation du container vers le plafond du véhicule, ce qui a pour effet de coincer le container entre la plateforme et le plafond et d'éviter tout déplacement du container à l'intérieur du véhicule.

Avantageusement et selon l'invention, la plateforme comprend en outre des guides latéraux qui s'étendent chacun le long de ladite direction longitudinale.

Selon cet aspect de l'invention, le container est guidé lors des opérations de chargement ou déchargement par les guides latéraux. Cela facilite les opérations de chargement et déchargement par l'opérateur.

En variante, les guides latéraux comprennent chacun une portion biseautée agencée au niveau de l'extrémité longitudinale des guides qui s'étend en regard de l'ouverture du véhicule. Cela permet de faciliter le chargement du container dans le véhicule, en offrant un espace disponible plus large au niveau de l'entrée dans le véhicule, qui se rétrécit une fois le container avancé dans le véhicule.

Avantageusement et selon l'invention, le véhicule comprend en outre au moins un moteur électrique de déplacement dudit véhicule.

Selon cet aspect de l'invention, le véhicule est décarboné et peut être utilisé dans les centres villes.

Avantageusement et selon l'invention, le véhicule comprend en outre un coffre amovible logé à l'arrière dudit véhicule.

Selon cet aspect de l'invention, le véhicule peut embarquer, en plus d'un container selon l'invention, un coffre amovible dans lequel des marchandises additionnelles spécifiques peuvent être emportées.

L'invention concerne également un container et un véhicule caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique de côté d'un container selon un mode de réalisation de l'invention,
[Fig. 2] est une vue schématique en perspective de dessous d'un organe roulant d'un container selon un mode de réalisation de l'invention,
[Fig. 3] est une vue schématique en perspective de dessous-avant de l'organe roulant de la figure 2,
[Fig. 4a] est une vue schématique de côté du container selon un mode de réalisation de l'invention en phase de chargement dans un véhicule, l'organe roulant avant représenté étant dans la position déployée verrouillée,
[Fig. 4b] est une vue schématique de côté du container selon un mode de réalisation de l'invention en phase de chargement dans un véhicule, l'organe roulant avant représenté basculant dans la position déployée libre,
[Fig. 4c] est une vue schématique de côté du container selon un mode de réalisation de l'invention en phase de chargement dans un véhicule, l'organe roulant avant représenté étant dans la position déployée libre,
[Fig. 4d] est une vue schématique de côté du container selon un mode de réalisation de l'invention en phase de chargement dans un véhicule, l'organe roulant avant représenté basculant dans la position rétractée,
[Fig. 4e] est une vue schématique de côté du container selon un mode de réalisation de l'invention en phase de chargement dans un véhicule, l'organe roulant avant représenté étant dans la position rétractée,
[Fig. 4f] est une vue schématique de côté du container selon un mode de réalisation de l'invention chargé dans un véhicule, les organes roulants avant et arrière représentés étant chacun dans la position rétractée,
[Fig. 5a] est une vue schématique de côté du container selon un mode de réalisation de l'invention en phase de déchargement d'un véhicule, l'organe roulant arrière représenté basculant de la position rétractée à la position déployée libre,
[Fig. 5b] est une vue schématique de côté du container selon un mode de réalisation de l'invention en phase de déchargement d'un véhicule, l'organe roulant arrière représenté étant dans la position déployée libre,
[Fig. 5c] est une autre vue schématique de côté du container selon un mode de réalisation de l'invention en phase de déchargement d'un véhicule, l'organe roulant arrière représenté étant dans la position déployée libre,
[Fig. 5d] est une vue schématique de côté du container selon un mode de réalisation de l'invention en phase de déchargement d'un véhicule, l'organe roulant arrière représenté étant dans la position déployée verrouillée,
[Fig. 6] est une vue schématique en perspective d'un véhicule selon un mode de réalisation de l'invention,
[Fig. 7] est une vue schématique en coupe d'une plateforme horizontale d'un véhicule selon un mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

Dans toute la description qui suit, les termes « avant » et « arrière » sont utilisés en référence à la direction de déplacement privilégié du container pour les opérations de chargement dans un véhicule de transport.

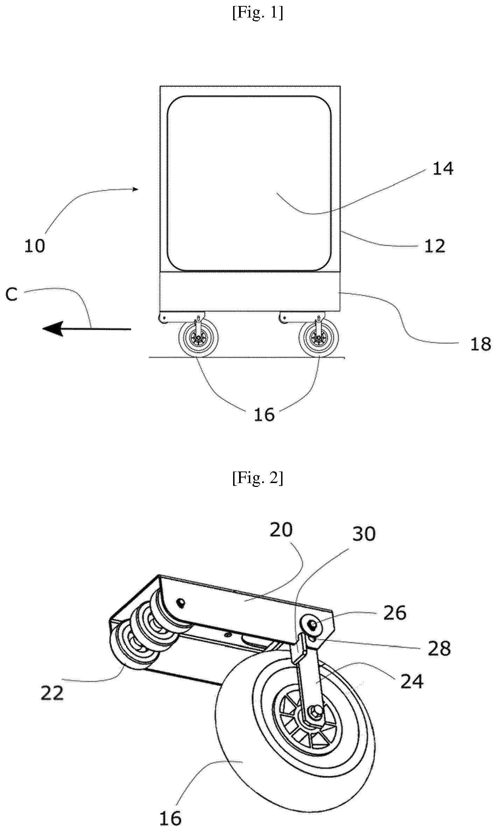

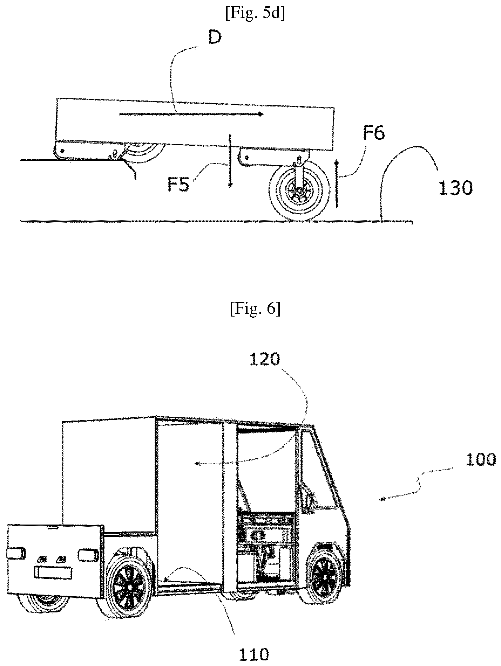

La figure 1 illustre schématiquement un container 10 selon un mode de réalisation de l'invention. Ce container 10 est destiné à être chargé et déchargé d'un véhicule 100 comprenant une plateforme horizontale 110 qui s'étend en regard d'une ouverture 120 d'accès au véhicule. Un mode de réalisation d'un tel véhicule 100 est représenté schématiquement sur la figure 6.

Le container selon l'invention comprend un caisson 12 comprenant au moins une ouverture 14 d'accès au caisson pour pouvoir y loger des marchandises (ou colis), non représentées sur les figures à des fins de clarté.

Le container comprend également des organes roulants 16 de déplacement du caisson dans un sens d'avancement privilégié, représenté schématiquement par la flèche référencée C sur les figures, et correspondant à la direction du container lors du chargement du container dans un véhicule. Sur toutes les figures, la flèche référencée D représente la direction du container lors des opérations de déchargement du container d'un véhicule.

Selon le mode de réalisation des figures, les organes roulants sont formés de quatre roues agencées par paire respectivement à l'avant et à l'arrière du container.

Bien entendu, selon d'autres modes de réalisation, les organes roulants peuvent ne comprendre que trois roues, par exemple deux à l'avant et une à l'arrière ou tout autre configuration, sans remettre en cause le principe de l'invention.

Le container comprend également un coffret 18 de logement de chaque organe roulant agencé sous le caisson 14. Dans le mode de réalisation des figures, un seul coffret 18 peut loger l'ensemble des organes roulants 16. Selon d'autres modes de réalisation, chaque organe roulant peut comprendre son propre coffret.

Les organes roulants 16 sont configurés pour pouvoir se déplacer d'une position, dite position déployée, dans laquelle ils s'étendent hors du coffret 18 et permettent ainsi le déplacement du container 10 sur un sol 130, et une position, dite position rétractée, dans laquelle ils sont logés principalement dans le coffret 18 lorsque le container est dans un véhicule. La particularité de l'invention est d'obtenir spontanément par simple déplacement du container vers le véhicule le basculement des organes roulant de la position déployée à la position rétractée et inversement.

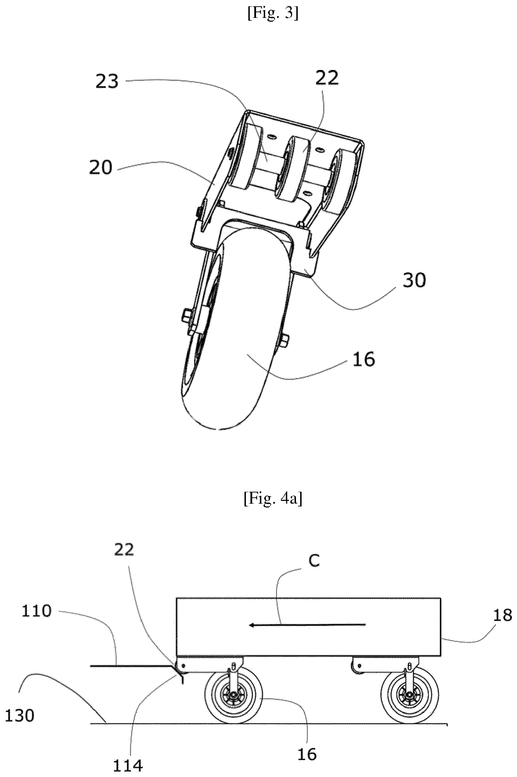

Sur les figures 4a à 5d, seuls les organes roulants et le coffret 18 sont représentés à des fins de clarté pour illustrer le mécanisme permettant aux organes roulants de basculer d'une position déployée à une position rétractée.

Les figures 2 et 3 illustrent schématiquement l'environnement de l'organe roulant 16 selon un mode de réalisation de l'invention.

L'organe roulant 16 est monté sur une armature longitudinale 20 formée par exemple d'un profilé à section droite transversale en forme de U et comprenant à une première extrémité longitudinale, trois roulettes 22 de contact portées par un même arbre mécanique 23 qui s'étend de part et d'autre des flancs du profilé formant l'armature longitudinale et à l'extrémité longitudinale opposée, un étrier 24 de support de l'organe roulant 16. Cet étrier 24 comprend une première extrémité qui est montée mobile en rotation par rapport à l'armature 20 autour d'un arbre de pivotement 26 et une extrémité opposée qui forme un pallier de l'organe roulant 16.

La base du profilé en forme de U de l'armature longitudinale est par exemple solidarisée au coffret 18 par des moyens de boulonnerie ou tous moyens équivalents, non représentés sur les figures à des fins de clarté.

On observe sur la figure 2 la portion inférieure d'une lumière oblongue 28 verticale ménagée dans l'armature 20 et dans laquelle s'étend l'arbre de pivotement 26. Ainsi, l'arbre de pivotement 26 peut se déplacer spontanément par gravité dans la lumière oblongue 28 d'une position, dite position verrouillée, à une position, dite position libre, et inversement par contact de l'organe roulant 16 avec le sol 130.

L'étrier 24 comprend également une patte de verrouillage 30 configurée pour venir s'encastrer dans une mortaise 32 formée dans la partie inférieure des flancs de l'armature, à l'aplomb de la patte de verrouillage lorsque l'organe roulant est dans la position déployée verrouillée.

La patte de verrouillage 30 est configurée pour pouvoir se désolidariser spontanément par gravité de la mortaise 32 lors du passage de l'organe roulant de la position rétractée à la position déployée libre comme illustré en lien avec les figures 4a à 5d.

La patte de verrouillage 30 s'étend transversalement de part et d'autre des flancs de ladite armature de manière à former une butée longitudinale qui entrave le balancement de l'organe roulant par contact avec l'armature lors du déchargement du container. Comme illustré sur la figure 3, la patte de verrouillage comprend également un évidement qui permet le passage de l'organe roulant 16.

Le principe de chargement du container dans un véhicule va maintenant être expliqué en lien avec les figures 4a à 4f.

Sur ces figures, seuls les organes roulants et le coffret 18 sont représentés à des fins de clarté. En outre, le véhicule de chargement n'est pas représenté à l'exception de la plateforme horizontale 110 et d'une butée transversale 112 qui s'étend transversalement sous la plateforme horizontale au niveau de la porte d'accès au véhicule.

Un opérateur déplace le container jusqu'à atteindre la position représentée sur la figure 4a dans laquelle les roulettes de contact 22 entrent en contact avec la butée 112 transversale du véhicule.

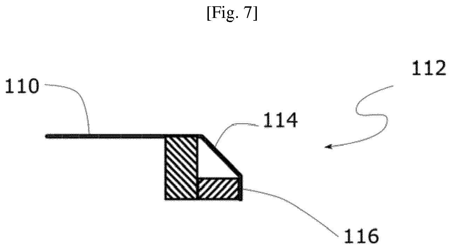

Cette butée 112 est représentée schématiquement en coupe partielle par la figure 7 et comprend une portion inclinée 114 qui forme une butée d'élévation du container et une portion verticale 116 s'étendant vers le sol depuis la butée d'élévation et formant une butée de basculement comme expliqué ci-après.

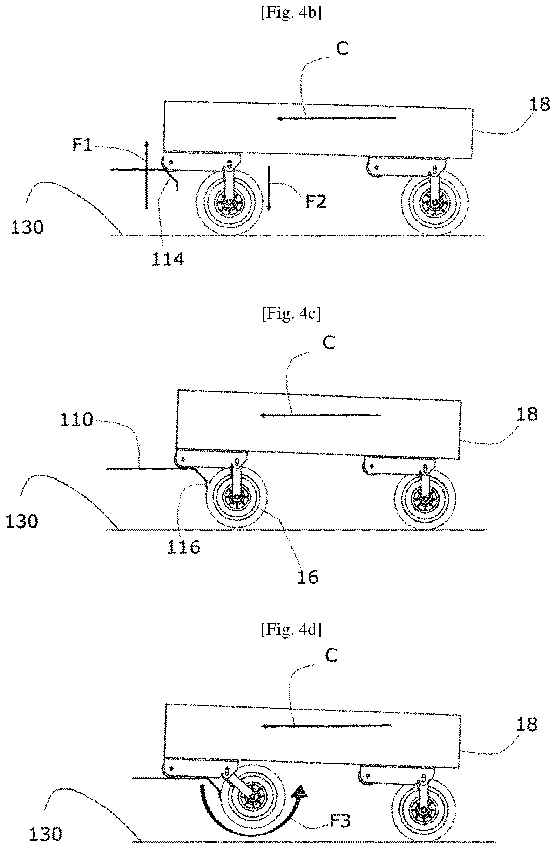

A partir de la position de la figure 4a, lorsque l'opérateur pousse le container suivant la direction représentée par la flèche C vers l'intérieur du véhicule, les roulettes 22 grimpent la butée d'élévation 114, ce qui a pour conséquence de lever l'avant de container (représenté par la flèche F1 sur la figure 4b) et de déplacer l'arbre 26 dans la lumière oblongue 28 sous l'effet de la gravité (représenté par la flèche F2 sur la figure 4b). Le déplacement de l'arbre 26 dans la lumière oblongue 28 libère également la languette de verrouillage 30 de la mortaise 32 conjuguée.

A partir de la position de la figure 4b, lorsque l'opérateur poursuit son déplacement du container selon la direction représentée par la flèche C vers l'intérieur du véhicule, les roulettes 22 roulent sur la plateforme horizontale et l'organe roulant 16 vient en butée contre la butée 116 de basculement.

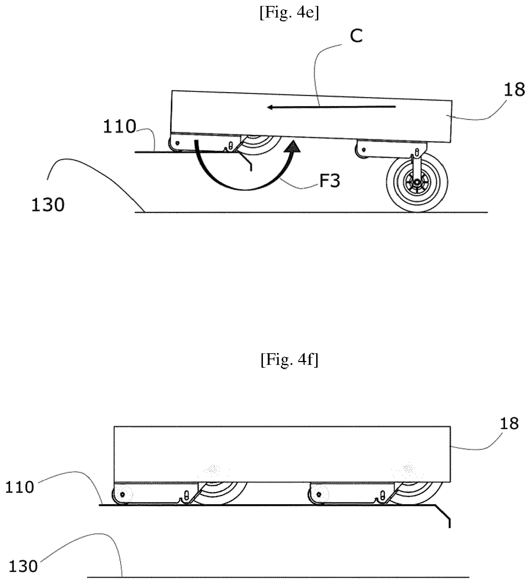

A partir de la position de la figure 4c, lorsque l'opérateur poursuit son déplacement du container selon la direction représentée par la flèche C vers l'intérieur du véhicule, l'organe roulant 16 pivote dans le sens antihoraire en suivant la rotation représentée par la flèche F3 sur les figures 4d et 4e, jusqu'à atteindre la position représentée par la figure 4e dans laquelle l'organe roulant 16 est logé dans le coffret 18.

Une fois que la première paire d'organes roulant 16 est logée dans le coffret, si l'opérateur poursuit son déplacement du container selon la direction représentée par la flèche C vers l'intérieur du véhicule, les organes roulants arrière vont suivre le même principe pour basculer de la position déployée à la position rétractée.

La figure 4f illustre schématiquement les organes roulants logés dans le coffret lorsque le container est totalement chargé dans le véhicule.

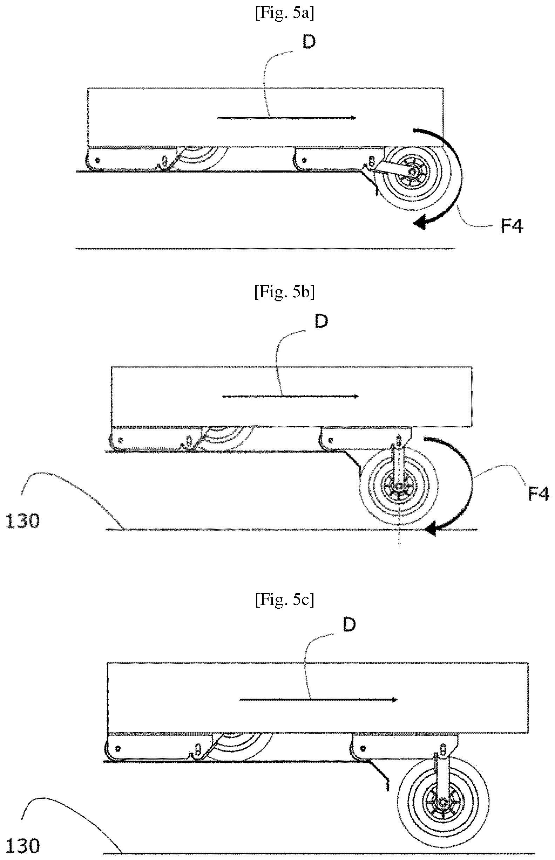

Le principe de déchargement du container d'un véhicule va maintenant être expliqué en lien avec les figures 5a à 5d.

Le point de départ est la figure 4f qui illustre le container logé dans le véhicule.

A partir de la position de la figure 4f, lorsque l'opérateur souhaite décharger le container, il tire sur le container selon la direction représentée par la flèche D vers l'extérieur du véhicule.

Lorsque l'organe roulant arrière atteint l'extrémité de la plateforme horizontale 110, l'organe roulant arrière va spontanément être mis en rotation sous l'effet de la gravité dans le sens horaire suivant la direction représentée schématiquement par la flèche référencée F4 sur les figures 5a et 5b. A la fin de la rotation, l'organe roulant 16 est dans la position déployée libre. L'arbre de pivotement 26 est suspendu dans la lumière 28 et l'organe roulant 16 ne touche pas le sol 130.

A partir de la position de la figure 5c, lorsque l'opérateur poursuit son déplacement du container selon la direction représentée par la flèche D vers l'extérieur du véhicule, les roulettes 22 de la roue arrière atteignent la portion inclinée 114 de la butée transversale, ce qui a pour effet de déplacer vers le bas le container jusqu'à ce qu'il atteigne le sol 130 à l'extérieur du véhicule. Le déplacement du container est représenté par la flèche référencée F5 sur la figure 5d. Dans le même temps, l'arbre 26 glisse dans la lumière 28 sous l'effet du contact de l'organe roulant 16 sur le sol 130. Ce déplacement de l'arbre 26 dans la lumière entraine également le verrouillage de la languette de verrouillage 30 dans la mortaise 32 conjuguée. Ce déplacement est représenté schématiquement par la flèche F6 sur la figure 5d.

A partir de la position de la figure 5d, lorsque l'opérateur poursuit son déplacement du container selon la direction représentée par la flèche D vers l'extérieur du véhicule, les organes roulants avant vont suivre la même cinématique et basculer de la position rétractée à la position déployée verrouillée.

La figure 6 illustre schématiquement un véhicule selon un mode de réalisation de l'invention. Comme décrit précédemment, ce véhicule comprend une plateforme horizontale de réception d'un container selon l'invention agencée en regard d'une ouverture d'accès au véhicule. Cette plateforme horizontale s'étend par exemple à une distance de 18 cm du sol, qui est supérieure à la distance qui sépare, dans la position déployée des organes roulants du container, l'axe de pivotement et la surface de contact des organes roulants avec le sol. Cette contrainte vise à permettre le basculement des organes roulants par contact avec la butée de basculement. L'homme du métier pourra déterminer sans difficultés la hauteur maximale de la plateforme horizontale et de la butée de basculement en fonction de la hauteur des organes roulants du container associé.

En particulier, le cœur de l'invention n'est pas lié aux dimensions du container ou de la hauteur de la plateforme, mais à la cinématique de basculement spontané des organes roulants de la position déployée à la position rétractée et inversement.

## Revendications

1. Container (10) mobile de transport de marchandises destiné à être chargé et déchargé d'un véhicule (100) de transport comprenant une plateforme (110) de réception du container qui s'étend en regard d'une ouverture d'accès (120) au véhicule, ledit container (10) comprenant :
- un caisson (12) comprenant au moins une ouverture d'accès (14) au caisson pour pouvoir y loger des marchandises,
- des organes roulants (16) de déplacement dudit caisson (12) dans un sens d'avancement privilégié et selon une direction principale d'avancement, dite direction longitudinale,
**caractérisé en ce qu'**il comprend en outre, pour chaque organe roulant (16), un coffret de logement (18) de cet organe roulant agencé sous ledit caisson (12), et **en ce que** chaque organe roulant (16) est monté mobile par rapport au caisson (12) entre une position, dite position déployée, dans laquelle il s'étend hors dudit coffret (18) et permet le déplacement par roulement dudit container (10) hors dudit véhicule (100), et une position, dite position rétractée, dans laquelle il est logé principalement dans ledit coffret (18) tout en permettant le déplacement par roulement dudit container (10) sur ladite plateforme (110) dudit véhicule, ledit passage de ladite position déployée à ladite position rétractée étant obtenu spontanément lors du chargement du container (10) dans ledit véhicule par la combinaison du déplacement dudit caisson selon la direction longitudinale et un contact entre le container (10) et une butée transversale (112) agencée sous la plateforme dudit véhicule, et le passage de ladite position rétractée à ladite position déployée étant obtenu spontanément par gravité lors du déchargement dudit container (10) dudit véhicule.

2. Container selon la revendication 1, **caractérisé en ce qu'**il comprend en outre, pour chaque organe roulant (16), une armature longitudinale (20) comprenant à une première extrémité longitudinale, au moins une roulette (22) de contact avec ladite butée transversale (112), et à une seconde extrémité longitudinale, un étrier (24) de support dudit organe roulant (16) monté mobile en rotation par rapport à ladite armature (20) autour d'un axe transversal, dit axe de pivotement, permettant audit organe roulant (16) de passer de ladite position déployée à ladite position rétractée lors du chargement du container (10) dans ledit véhicule et inversement lors du déchargement dudit container (10) hors dudit véhicule, chaque roulette de contact (22) formant en outre des moyens de roulement additionnels dudit container (10) sur ladite plateforme horizontale dudit véhicule lorsque lesdits organes roulants (16) sont dans ladite position rétractée.

3. Container selon la revendication 2, **caractérisé en ce que** chaque étrier (24) de support dudit organe roulant (16) comprend :
- un arbre (26) formant l'axe de pivotement s'étendant dans une lumière oblongue (28) verticale ménagée dans ladite armature (20) et configuré pour pouvoir se déplacer spontanément par gravité dans ladite lumière oblongue (28) d'une position, dite position verrouillée, à une position, dite position libre, et inversement par contact dudit organe roulant (16) avec le sol (130),
- une patte de verrouillage (30) configurée pour venir s'encastrer dans une mortaise (32) formée dans ladite armature (20) longitudinale dans ladite position verrouillée et pour pouvoir s'en désolidariser spontanément sous l'effet de la gravité lors du passage vers ladite position libre.

4. Container selon la revendication 3, **caractérisé en ce que** la patte de verrouillage (30) s'étend transversalement de part et d'autre de ladite armature (20) de manière à former une butée longitudinale qui entrave le balancement dudit organe roulant (16) par contact avec ladite armature (20) lors du déchargement dudit container.

5. Container selon l'une des revendications 2 à 4, **caractérisé en ce que** chaque armature longitudinale (20) comprend trois roulettes de contact (22) montées sur un même arbre transversal solidaire de ladite armature (20).

6. Container selon l'une des revendications 1 à 5, **caractérisé en ce qu'**il comprend un unique coffret de logement (18) de l'ensemble desdits organes roulants (16).

7. Container selon l'une des revendications 1 à 6, **caractérisé en ce que** lesdits organes roulants (16) sont des roues.

8. Véhicule de transport (100) d'au moins un container mobile de transport de marchandises selon l'une des revendications 1 à 7 comprenant une plateforme (110) de réception dudit container agencée en regard d'une ouverture d'accès (120) au véhicule, **caractérisé en ce que** ladite plateforme (110) s'étend à une distance inférieure à 30 cm sol, de préférence inférieure à 20 cm du sol, et supérieure à la distance qui sépare, dans la dite position déployée desdits organes roulants (16), l'axe de pivotement et la surface de contact desdits organes roulants avec le sol, et **en ce que** ladite plateforme (110) comprend une butée transversale (112) ménagée sous la plateforme dudit véhicule qui présente une portion inclinée formant une butée d'élévation (114) dudit container par contact avec desdites roulettes de contact dudit container et permettant de passer lesdits organes roulants de ladite position verrouillée à ladite position libre, et une portion verticale s'étendant vers le sol depuis ladite butée d'élévation formant une butée de basculement (116) dudit organe roulant de ladite position déployée libre à ladite position rétractée.

9. Véhicule de transport selon la revendication 8, **caractérisé en ce que** ladite plateforme (110) comprend en outre des guides latéraux qui s'étendent chacun le long de ladite direction longitudinale.

10. Véhicule de transport selon l'une des revendications 8 ou 9, **caractérisé en ce qu'**il comprend en outre au moins un moteur électrique de déplacement dudit véhicule.

11. Véhicule de transport selon l'une des revendications 8 à 10, **caractérisé en ce qu'**il comprend en outre un coffre amovible logé à l'arrière dudit véhicule.
